# EUROPÄISCHE PATENTSCHRIFT

(11) **EP 2 718 047 B1**
(45) Veröffentlichungstag und Bekanntmachung des Hinweises auf die Patenterteilung: **19.08.2015**
(21) Anmeldenummer: 12716444.0
(22) Anmeldetag: 25.04.2012
(51) Int. Cl.: B23B 5/16, B26D 3/16, B26D 3/28, B26D 7/01

(54) **VORRICHTUNG ZUM SCHÄLEN VON SCHLÄUCHEN**
DEVICE FOR PEELING HOSES
DISPOSITIF POUR ÉCORCER DES TUYAUX

(30) Priorität: 11.06.2011 DE 102011104102
(43) Veröffentlichungstag der Anmeldung: 16.04.2014
(73) Patentinhaber: Von Waitzische Beteiligungen GmbH, 34117 Kassel (DE)
(72) Erfinder: Schröck, Peter, 60313 Frankfurt am Main (DE)
(74) Vertreter: Grättinger Möhring von Poschinger Patentanwälte Partnerschaft
(86) Internationale Anmeldenummer: PCT/EP2012/057551
(87) Internationale Veröffentlichungsnummer: WO 2012/171691

(56) Entgegenhaltungen:
- DE-A1-102009 010 776
- DE-U1- 9 314 060

## Beschreibung

Die Erfindung betrifft eine Vorrichtung zum Schälen von Enden mehrlagiger Schläuche mit einer mittleren Lage aus der Gruppe Metalle und Textilien zum nachfolgenden Verpressen mit einer Schlaucharmatur.

Druckschläuche, insbesondere solche aus mehreren Lagen, insbesondere solche mit einer oder mehreren hochfesten Stahl- oder Textileinlagen, müssen in aller Regel an ihren Enden mit Anschlussarmaturen versehen werden. Dabei unterscheiden sich solche Schläuche nach Durchmessern, Druckbereich, Längen und Anzahl der Stahl- oder Textileinlagen. Es ist bekannt, die Schlauchenden auf einen ausgewählten Dorn aufzuschieben und die jeweils äußerste Lage, auch als Obergummi bezeichnet, durch eine Stahlbürste mit zylindrischem Außenumfang und eine entsprechende Relativbewegung abzubürsten. Diese Verfahren führen zu erheblichen Rauch- und Staubbelastungen des Schlauchinneren, des Arbeitsplatzes und der Umwelt. Dies bedingt komplizierte Reinigungsvorrichtungen mit Filtern. Der Schlauch muss während des Abbürstens um seine eigene Achse gedreht werden, was bei langen Schläuchen umständlich ist. Je nach Durchmesser, Druckklasse und Schlauchtyp müssen immer neue Einstell-Konfigurationen berücksichtigt werden, was teuere Umrüstzeiten und Probestücke verursacht.

Aus der DE 10 2006 025 812 B3 ist bereits eine Vorrichtung zum Schälen von stangen- oder rohrförmigen Werkstücken bekannt, die einen Werkzeugträger, der in einer Werkzeughalterung geführt wird, und eine Zustellhülse aufweist, die den Werkzeugträger in der Werkzeughalterung verschiebt. Die Zustellung der Werkzeuge an das zu bearbeitende Bauteil erfolgt dabei über eine Relativrotation zwischen der Werkzeughalterung und der Zustellhülse. Dazu weisen die Führungsfläche der Zusteilhülse, die auf den Werkzeugträger einwirken, einen in Urzeigerrichtung stetig abnehmenden Radius auf.

Aus der DE 10 2009 010776 A1 ist ein Schälgerät zur Bearbeitung von Kunststoffrohren oder von mit Kunststoffen beschichteten Rohren bekannt, mit dem eine definierte Schälkraft auf das zu schälende Rohr aufgebracht werden soll. Gleichzeitig soll das Schälgerät schnell und bequem an unterschiedliche Rohrdurchmesser anpassbar und auch bei engen Verhältnissen leicht handhabbar sein. Dies wird dadurch erreicht, dass das Gehäuse des Schälgerätes in einer zur Längsachse einer Gewindespindel in zwei voneinander beabstandete Baugruppen geteilt ist, deren Abstand relativ zueinander verstellbar ist. Diese Teilung ermöglicht es, das Schälmesser durch eine Abstandsveränderung der Baugruppen an unterschiedliche Durchmesser des zu bearbeitenden Rohres anzupassen. Dadurch erspart man sich das Lösen und Spannen von Schrauben.

Aus der DE 93 14 060 ist eine Vorrichtung zum Außen- und Innenschälen von Schläuchen, insbesondere von Hydraulikschläuchen bekannt, bei der das Außenschälen und das Innenschälen in einem Arbeitsgang erfolgt. Dazu weist die Vorrichtung einen Führungsdorn mit einem Messer zum Innenschälen und ein darum rotierendes Schälmesser zum Außenschälen auf. Das Schälmesser wird durch eine Hohlwelle angetrieben, während der Führungsdorn durch eine weitere Welle, die in der Hohlwelle verläuft, in Bewegung versetzt wird. Sowohl die Hohlwelle als auch die weitere Welle werden durch eine gemeinsame Antriebseinrichtung angetrieben, wobei die Antriebseinrichtung direkt an der Welle angreift und mit der Hohlwelle über ein Drehrichtungsumkehrgetriebe verbunden ist.

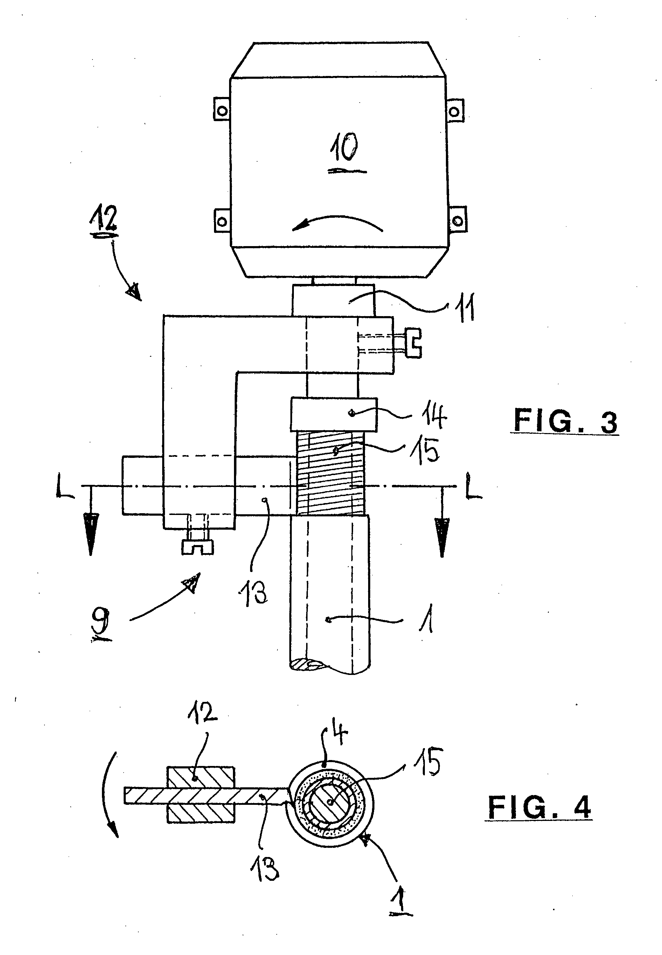

Es sind außerdem Schälmaschinen bekannt (siehe Figuren 3 und 4) mit denen der Obergummi mehrlagiger Schläuche an ihren Enden abgeschält wird. Auch hier müssen durch die Vielzahl der Schläuche immer neue Einstell-Konfigurationen berücksichtigt werden, was zu Zeitverlusten durch Umrüsten führt. Deshalb sind Schälmaschinen bekannt, die bis zu 30 Schälköpfe in einem Stapelmagazin bevorraten. Jeder Schälkopf ist nur für einen bestimmten Schlauch verwendbar und muss je nach Auftrag manuell getauscht werden. Aufwand und Wartung dieses Spezialwerkzeugs sind hoch. Umrüstzeiten fallen auch hier an.

Der Erfindung liegt daher die Aufgabe zugrunde, eine große Druckfestigkeit und Dichtheit der Schlauchleitungen zu erzeugen, dabei umweltbelastenden Gummistaub beim Entfernen des Obergummis zu vermeiden, Aufwand an Spezialzusatzwerkzeug in Form von Schälköpfen zu reduzieren und auf deren technisch bedingte Zeitverluste beim Umrüsten und Probestücke zu verzichten.

Die Lösung dieser Aufgabe ist gekennzeichnet durch
a) einen um eine Achse drehbaren Dornenhalter mit mehreren auf dem Umfang angeordneten Dornen für das Aufschieben von Schläuchen,
b) einen um die gleiche Achse drehbaren Messerhalter mit mindestens einem Messer, dessen Schneidkante gegen den Schlauch bewegbar ist.

Damit gelingt es, folgende Aufgaben zufriedenstellend zu lösen:
1. Umrüstzeiten zu vermeiden
2. Fehler beim Umrüsten auszuschalten
3. Probeschälungen nach dem Umrüsten zu vermeiden
4. Weniger Aufwand an Spezialwerkzeug
5. Fachpersonal für Wartung und Einstellungen zu verringern
6. Schonung der Umwelt durch Wegfall von Rauch und Staub.

Es ist im Zuge weiterer Ausgestaltungen der Erfindung besonders vorteilhaft, wenn entweder einzeln oder in Kombination:
- eine Einstellvorrichtung zur Verstellung der relativen Lage der Schneidkante parallel zur Achse des Schlauchs vorgesehen ist,
- die Dorne einen Anschlag für das Ende des Schlauchs aufweisen,
- die Dorne relativ zum Dornenhalter verstellbar sind,
- die Stellung des Dornenhalters durch Rastbolzen arretierbar ist,
- der Abstand der Dorne zur Kreisbahn der Schneide des mindestens einen Messers dem halben Durchmesser der Metall- oder Textileinlage entspricht,
- die Achsen des Führungsdorns und die Achsen des Aufnahmegewindes versetzt sind und durch deren Exzentermaß der Abstand zur Kreisbahn der Messer, dem Wurfkreis, einstellbar ist,
- mindestens eines der Messer zur Mittelachse hin beweglich gelagert ist,
- mindestens eines der Messer samt Messerhalter in einer Aufnahmebohrung angeordnet ist,
- eine Druckfeder bei Rotation des Messerhalters der Fliehkraft des Messerbolzens entgegenwirkt,
- eine Distanzhülse die durch die Fliehkraft hervorgerufene Federung begrenzt.

Ausführungsbeispiele des Erfindungsgegenstandes und der Komponenten des Schlauches und der Schälvorrichtung und der Wirkungsweisen der Vorrichtungen und weitere Vorteile werden nachfolgend anhand der Figuren 1 bis 7 näher erläutert.

Es zeigen:
- Figur 1: eine Explosionsdarstellung der Komponenten einer Schlauchleitung
- Figur 2: die Komponenten der Figur 1 in verpresstem Zustand
- Figur 3: eine Schälvorrichtung für ein bestimmtes Schlauchende
- Figur 4: einen Schnitt entlang der Linie L-L in Figur 3
- Figur 5: einen vereinfachten radialen Schnitt durch die Vorrichtung nach Figur 6
- Figur 6: eine ergänzte Draufsicht auf einen Messerhalter mit Messern und einen dahinter (oder darüber) liegenden Dornenhalter für das Aufschieben von unterschiedlichen Schlauchenden und
- Figur 7: eine Seitenansicht eines exzentrischen Domes.

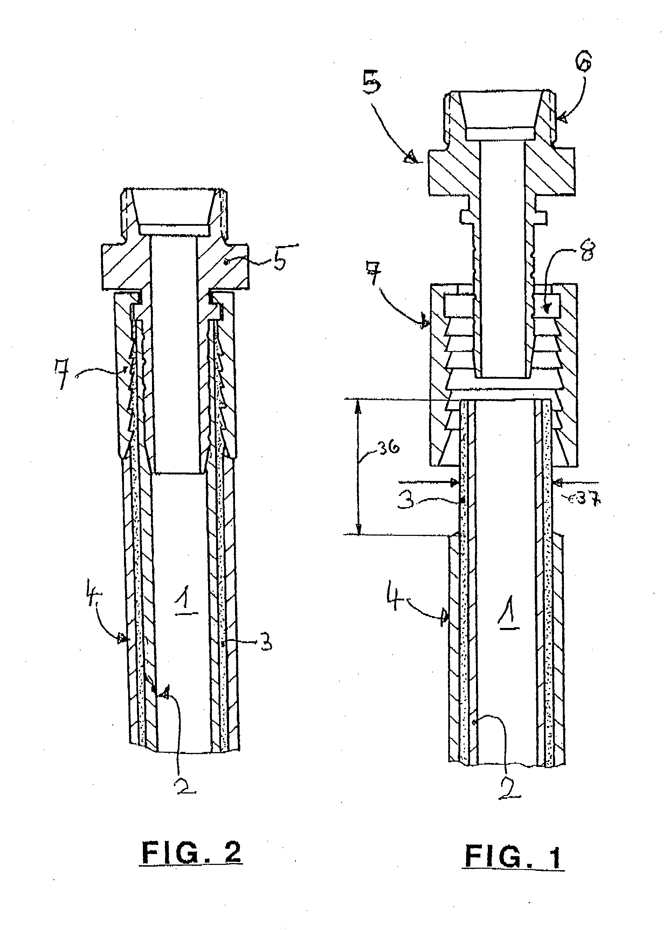

In Figur 1 ist ein Schlauch 1 dargestellt, der dreilagig ausgebildet ist und eine Innenlage 2 aus einem elastomeren Werkstoff, eine mittlere Lage 3 aus einem metallischen oder textilen Werkstoff und eine Außenlage 4 aus einem elastomeren Werkstoff besitzt. Solche Schläuche können bis zu 2000 bar und mehr aushalten. Vorgelagert sind ein Anschlussnippel 5 mit einem Außengewinde 6 für weitere Anschlüsse und eine weitere Presshülse 7 mit einer Innenverzahnung 8 für den formschlüssigen Eingriff in den metall- oder textilarmierten Werkstoff der mittleren Lage 3. Die Schällänge ist mit 36 und der Schäldurchmesser mit 37 bezeichnet.

Figur 2 zeigt die Komponenten der Figur 1 in verpresstem Zustand, nachdem der Endbereich des Schlauches bereits abgeschält war.

Figur 3 zeigt eine Schälvorrichtung 9 für ein Ende eines Schlauches 1 eines bestimmten Durchmessers mit einer bestimmten Schällänge eines bestimmten Schlauchtyps einer bestimmten Druckklasse. Ein Motor 10 ist über eine Hohlwelle 11 mit einem Schälkopf 12 drehfest verbunden, der als Winkelstück ausgebildet ist und ein radial verstellbares Messer 13 trägt. Der Schälkopf 12 trägt einen Dorn 15 mit einem Anschlag 14. Das Ende eines Schlauches 1 wird auf den Dorn 15 bis zum Anschlag 14 aufgeschoben. Der Schlauch 1 ist drehfest gelagert, da er in der Regel in der Hand gehalten wird. Andererseits rotiert der Schälkopf 12 mit verhältnismäßig niedriger Drehzahl von beispielsweise 120 U/min.

Die Figur 4 zeigt einen Schnitt entlang der Linie L-L in Figur 3 und erläutert damit den Schälvorgang. Damit wird die Hauptaufgabe gelöst, nämlich der Ersatz des nachteiligen Abbürstens durch Schälen der Außenlage 4, auch als Obergummi bezeichnet.

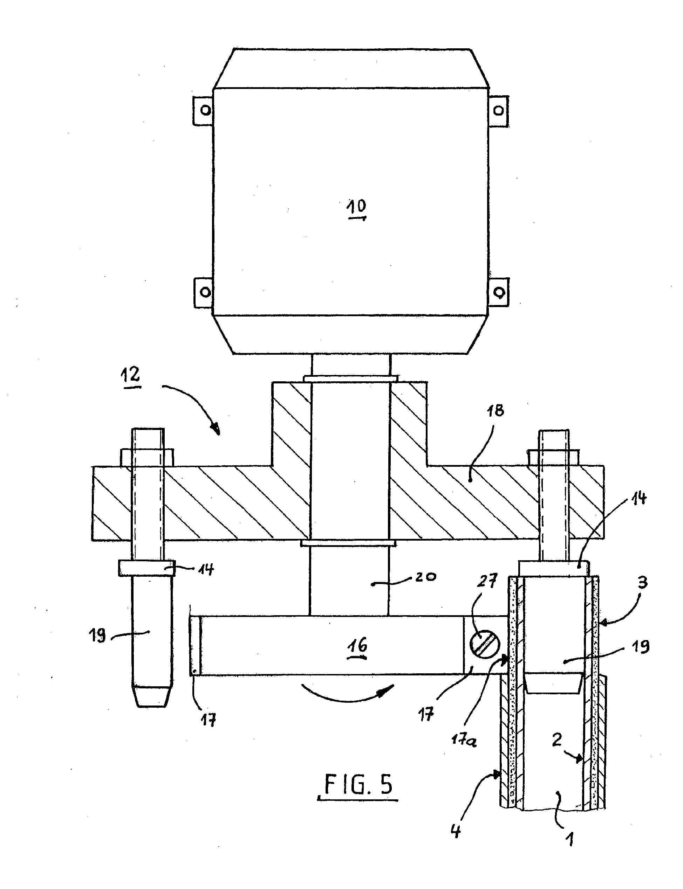

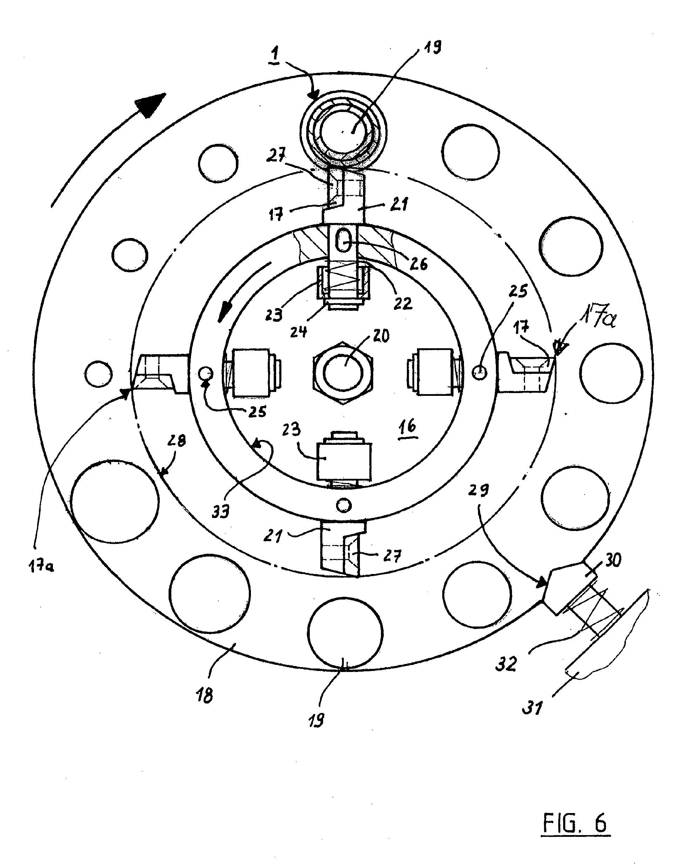

Figur 5 zeigt einen diametralen Schnitt durch eine Vorrichtung analog Figur 6 und die Figur 6 eine Draufsicht auf einen Messerhalter 16 mit Messern 17, die je eine Schneide 17a aufweisen und einen dahinter (oder darüber) liegenden Dornenhalter 18 für eine Vielzahl unterschiedlicher Dorne 19 für das Aufschieben von Schlauchenden. Der Motor 10 ist drehfest mit dem Messerhalter 16 verbunden, so dass er mit der Antriebsdrehzahl des Motors 10 rotiert. Andererseits ist der Dornenhalter 18 auf der Welle 20 frei drehbar, wird aber an der eigenen Rotation wegen Lagerreibung durch den jeweils bestückten Dorn 19 gehindert, da der Schlauch 1 von Hand gehalten, den Dornenhalter 18 kreisförmig drehen kann. Hierbei erstreckt sich der Schälvorgang auf den gesamten Umfang des Schlauches 1. Die oberste Lage 4 wird bis auf die mittlere Lage 3 von den Messern 17 des schnell rotierenden Messerhalters 16 kleinteilig zerspant. Die Späne können staubfrei entsorgt werden. Die Drehzahl des Messerhalters 16 entspricht beispielhaft der Drehzahl des Motors 10.

Figur 6 zeigt weiterhin, dass der Dornenhalter 18 auf seinem Umfang mit zwölf Dornen 19 bestückt ist, so dass damit zwölf Schläuche 1 unterschiedlicher Schäldurchmesser 37 und Schällängen 36 an ihren Enden geschält werden können. Die Achsen der Dorne 19 haben dabei einen solchen Abstand von der Welle 20, dass die Schneiden der Messer 17 immer nur die äußerste Lage 4 des jeweiligen Schlauches 1 abschälen. An der obersten Stelle ist ein solcher Vorgang nochmals gezeigt: Die Messer 17 haben die äußerste Lage 4 des Schlauches 1 bereits durchdrungen und entfernt. Die gegenläufigen Rotationsbewegungen sind durch Pfeile angedeutet. Bei der Kreisbewegung des Schlauches 1 erreichen die Messer 17 immer andere Stellen des Schlauchumfanges, bis nahezu eine zylindrische Oberfläche entstanden ist.

Der Messerhalter 16 ist mit vier Messerbolzen 21 bestückt, an denen Messer 17 mit Schrauben 27 befestigt sind. Rotationssymmetrisch bilden sie einen Wurfkreis 28, innerhalb dessen die Zerspanung stattfindet. Die Lage der Messerbolzen 21 wird durch Langlöcher 26 und Schrauben 25 bestimmt. Bei Rotation des Messerhalters 16 werden durch Fliehkraft die Messer 17 nach außen gedrückt und die Druckfedern 22 gestaucht. Der Federweg endet, wenn die Distanzhülse 23 die Innenfläche des Messerhalters 16 berührt. Ein Sicherungsring 24 bestimmt die Vorspannung der Druckfeder 22. Vorspannung und Federweg sollen ein elastisches Arbeiten der Messer 17 gewährleisten für den Fall, dass im Schlauchmaterial Lagetoleranzen zwischen Innendurchmesser und Armierung auftreten. Anderenfalls bestünde die Gefahr, dass die Armierung beschädigt und der Schlauch 1 unbrauchbar wird.

Figur 6 zeigt weiterhin einen Rastbolzen 30, welcher im Leerlauf verhindert, dass durch Lagerreibung zwischen Messerträger 16 und Dornenhalter 18 dieser mitgenommen wird. Die Kuppe des Rastbolzens 30 rastet in eine Kerbe 29 am Umfang des Dornenhalters 18 ein und beendet ein Weiterdrehen. Eine Druckfeder 32, die sich gegen eine ortsfeste Halterung 31 abstützt, lässt ein leichtes Einfedern des Rastbolzens 30 zu, so dass ohne großen Kraftaufwand die Arretierung wieder gelöst werden kann. Im entriegelten Zustand gleitet die Kuppe des Rastbolzens 30 über die Außenfläche des Dornenhalters 18.

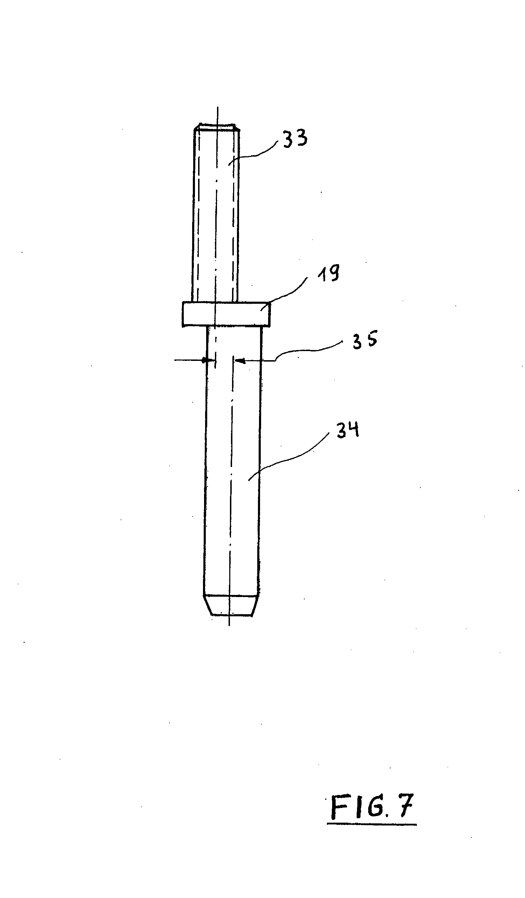

Figur 7 zeigt einen Dorn 19. Die Achsen des Aufnahmegewindes 33 und des Führungsbolzens 34 sind radial versetzt. Durch das Exzentermaß 35 wird erreicht, dass durch Verdrehen des Domes 19 gegenüber den Dornenhalter 18 der Abstand zum Wurfkreis 28 einstellbar ist. Diese Maßnahme ist erforderlich, wenn große Toleranzen im Durchmesser der mittleren Lage 3 ein Nachjustieren der Dorne 19 erforderlich machen.

**Bezugszeichenliste:**

| | | | |
|---|---|---|---|
| 1 | Schlauch | 26 | Langloch |
| 2 | Innenlage | 27 | Schraube |
| 3 | mittlere Lage | 28 | Wurfkreis |
| 4 | Außenlage | 29 | Kerbe |
| 5 | Anschlussnippel | 30 | Rastbolzen |
| 6 | Außengewinde | 31 | Halterung |
| 7 | Presshülse | 32 | Druckfeder |
| 8 | Innenverzahnung | 33 | Aufnahmegewinde |
| 9 | Schälvorrichtung | 34 | Führungsbolzen |
| 10 | Motor | 35 | Exzentermaß |
| 11 | Hohlwelle | 36 | Schällänge |
| 12 | Schälkopf | 37 | Schäldurchmesser |
| 13 | Schälmesser | | |
| 14 | Anschlag | | |
| 15 | Dorn | | |
| 16 | Messerhalter | | |
| 17 | Messer | | |
| 17a | Schneide | | |
| 18 | Dornenhalter | | |
| 19 | Dornen | | |
| 20 | Welle | | |
| 21 | Messerbolzen | | |
| 22 | Druckfeder | | |
| 23 | Distanzhülse | | |
| 24 | Sicherungsring | | |
| 25 | Schraube | | |

## Patentansprüche

1. Vorrichtung zum Schälen von Enden mehrlagiger Schläuche (1) mit einer mittleren Lage (3) aus der Gruppe Metalle und Textilien zum nachfolgenden Verpressen mit einer Schlaucharmatur (5,7), **gekennzeichnet durch**
a) einen um eine Achse drehbaren Dornenhalter (18) mit mehreren, auf den Umfang verteilten Dornen (19) für das Aufschieben von Schläuchen (1) und **durch**
b) einen um die gleiche Achse drehbaren Messerhalter (16) mit mindestens einem Messer (17), dessen Schneide (17a) gegen den Schlauch (1) beweglich ist.

2. Vorrichtung nach Anspruch 1, **gekennzeichnet durch** eine Einstellvorrichtung zur Verstellung der relativen Lage der Schneide (17a) parallel zur Achse des Schlauchs (1).

3. Vorrichtung nach Anspruch 1, **dadurch gekennzeichnet, dass** die Dorne (19) einen Anschlag (14) für das Ende des Schlauches (1) aufweisen.

4. Vorrichtung nach Anspruch 1, **dadurch gekennzeichnet, dass** die Dorne (19) relativ zum Dornenhalter (18) verstellbar sind.

5. Vorrichtung nach Anspruch 1, **dadurch gekennzeichnet, dass** die Stellung des Dornenhalters (18) durch einen Rastbolzen (30) arretierbar ist.

6. Vorrichtung nach Anspruch 1, **dadurch gekennzeichnet, dass** der Abstand der Dorne (19) zur Kreisbahn der Schneide (17a) des mindestens einen Messers (17) dem halben Durchmesser der mittleren Einlage (3) entspricht.

7. Vorrichtung nach Anspruch 1, **dadurch gekennzeichnet, dass** die Achsen des Führungsdorns (34) und die Achsen des Aufnahmegewindes (33) versetzt sind und durch deren Exzentermaß (35) der Abstand zur Kreisbahn der Messer (17), dem Wurfkreis (28) einstellbar ist.

8. Vorrichtung nach Anspruch 1, **dadurch gekennzeichnet, dass** mindestens eines der Messer (17) zur Mittelachse hin beweglich gelagert ist.

9. Vorrichtung nach Anspruch 1, **dadurch gekennzeichnet, dass** mindestens eines der Messer (17) samt Messerhalter (16) in einer Aufnahmebohrung angeordnet ist.

10. Vorrichtung nach Anspruch 1, **dadurch gekennzeichnet, dass** eine Druckfeder (22) bei Rotation des Messerhalters (16) der Fliehkraft des Messerbolzens (21) entgegenwirkt.

11. Vorrichtung nach Anspruch 1, **dadurch gekennzeichnet, dass** eine Distanzhülse (23) die durch die Fliehkraft hervorgerufene Federung begrenzt.

## Claims

1. A device for stripping the ends of multilayer hoses (1), with a central layer (3), from the metals and textiles group, to be subsequently pressed together with a hose fitting (5, 7),
**characterised by**
a) a mandrel holder (18) that can be rotated about an axis, with a plurality of mandrels (19) distributed around the periphery, for the sliding-on of hoses (1), and by
b) a blade holder (16) that can be rotated about the same axis, with at least one blade (17), whose cutting edge (17a) can be moved against the hose (1).

2. The device in accordance with Claim 1,
**characterised by**
an adjustment device for purposes of adjusting the relative position of the cutting edge (17a) parallel to the axis of the hose (1).

3. The device in accordance with Claim 1,
**characterised in that**,
the mandrels (19) have a stop (14) for the end of the hose (1).

4. The device in accordance with Claim 1,
**characterised in that**,
the mandrels (19) can be adjusted relative to the mandrel holder (18).

5. The device in accordance with Claim 1,
**characterised in that**,
the position of the mandrel holder (18) can be locked by means of a locking bolt (30).

6. The device in accordance with Claim 1,
**characterised in that**,
the spacing between the mandrels (19) and the circular path of the cutting edge (17a) of the at least one blade (17) corresponds to half the diameter of the central inlaid layer (3).

7. The device in accordance with Claim 1,
**characterised in that**,
the axes of the guide mandrel (34) and the axes of the mating thread (33) are offset, and by means of their eccentric dimension (35) the distance to the circular path of the blade (17), the throw circle (28), can be adjusted.

8. The device in accordance with Claim 1,
**characterised in that**,
at least one of the blades (17) is mounted such that it can move towards the central axis.

9. The device in accordance with Claim 1,
**characterised in that**,
at least one of the blades (17), together with the blade holder (16), is arranged in a locating bore.

10. The device in accordance with Claim 1,
**characterised in that**,
when the blade holder (16) is rotating, a compression spring (22) operates against the centrifugal force of the blade bolt (21) .

11. The device in accordance with Claim 1,
**characterised in that**,
a spacer sleeve (23) limits the spring action caused by the centrifugal force.

## Revendications

1. Dispositif pour écorcer des extrémités de tuyaux multicouches (1) avec une couche médiane (3) du groupe des métaux et des textiles pour le pressage qui s'en suit avec un raccord pour tuyau (5, 7), **caractérisé par**
a) une monture de mandrins (18) pouvant tourner autour d'un axe avec plusieurs mandrins (19) répartis sur la périphérie pour enfiler des tuyaux (1), et par
b) un porte-lame (16) pouvant tourner autour du même axe avec au moins une lame (17) dont l'arête vive (17a) est mobile contre le tuyau (1).

2. Dispositif selon la revendication 1, **caractérisé par** un dispositif de réglage pour régler la position relative de l'arête vive (17a) parallèlement à l'axe du tuyau (1).

3. Dispositif selon la revendication 1, **caractérisé en ce que** les mandrins (19) présentent une butée (14) pour l'extrémité du tuyau (1).

4. Dispositif selon la revendication 1, **caractérisé en ce que** les mandrins (19) peuvent être réglés par rapport à la monture de mandrins (18).

5. Dispositif selon la revendication 1, **caractérisé en ce que** la position de la monture de mandrins (18) peut être arrêtée grâce à un boulon d'arrêt (30).

6. Dispositif selon la revendication 1, **caractérisé en ce que** l'espacement des mandrins (19) par rapport à la trajectoire circulaire de l'arête vive (17a) de cette au moins une lame (17) correspond à la moitié du diamètre de la couche médiane (3).

7. Dispositif selon la revendication 1, **caractérisé en ce que** les axes du mandrin de guidage (34) et les axes du filetage de réception (33) sont décalés et que grâce à leur degré d'excentration (35), il est possible de régler l'espacement par rapport à la trajectoire circulaire des lames (17), le cercle de lancement (28) .

8. Dispositif selon la revendication 1, **caractérisé en ce qu'**au moins l'une des lames (17) est logée de manière mobile vers l'axe central.

9. Dispositif selon la revendication 1, **caractérisé en ce qu'**au moins l'une des lames (17) est disposée avec le porte-lame (16) dans un alésage de réception.

10. Dispositif selon la revendication 1, **caractérisé en ce qu'**un ressort de pression (22) agit à l'encontre de la force centrifuge de l'axe de lame (21) lors de la rotation du porte-lame (16).

11. Dispositif selon la revendication 1, **caractérisé en ce qu'**une douille d'espacement (23) limite l'élasticité provoquée par la force centrifuge.
